(19) **Europäisches Patentamt / European Patent Office / Office européen des brevets**

(11) **EP 3 905 018 A1**

(12) **EUROPEAN PATENT APPLICATION**

(43) Date of publication:
**03.11.2021 Bulletin 2021/44**

(51) Int Cl.:
**G06F 3/0481** (2013.01)    **G06F 3/0488** (2013.01)

(21) Application number: **21164521.3**

(22) Date of filing: **24.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.05.2020 JP 2020081389**

(71) Applicant: **Lenovo (Singapore) Pte. Ltd.**
**New Tech Park 556741 (SG)**

(72) Inventors:
- **NOMURA, Ryohta**
  **Kanagawa, 2200012 (JP)**
- **CROMER, Daryl Carvis**
  **Morrisville, North Carolina 27560 (US)**
- **MIRANDA, Jan Paul Fuentes**
  **Kanagawa, 2200012 (JP)**

(74) Representative: **Openshaw & Co.**
**8 Castle Street**
**Farnham, Surrey GU9 7HR (GB)**

(54) **INFORMATION PROCESSING APPARATUS AND INFORMATION PROCESSING METHOD**

(57) The present invention is to provide an information processing apparatus and an information processing method capable of improving operability to zoom in on a screen of a touch screen in order to perform input. The information processing apparatus includes: a detection unit which detects a touch operation to bring an operation medium into contact with the touch screen and a hovering state in which the operation medium is in a non-contact state above the touch screen; a display processing unit which generates a zoom-in image obtained by zooming in on at least part of an original image to be displayed on the touch screen, and displays at least a partial area of the zoom-in image on the touch screen as a zoom-in area when the hovering state lasts for a predetermined time or more and the amount of movement of the operation medium in the hovering state is within a first threshold value; and an input unit which accepts input of a letter, a numeral, a symbol, a figure, or a drawing based on the touch operation to the zoom-in area.

FIG. 15

**Description**

Field of the Invention

The present invention relates to an information processing apparatus and an information processing method.

Background of the Invention

Various techniques related to operations to control screen display on a touch screen have been conventionally proposed.

For example, US Patent No. 10318047 discloses a technique for displaying an enlarged touch screen based on a flying flick operation performed in a state of proximity to the surface of the touch screen at a predetermined distance from the surface thereof. Specifically, in this technique, when a flying flick operation with an operation medium such as a finger or a touch pen is detected, a partial image obtained by enlarging a predetermined area of an original image displayed on the touch screen is displayed in a manner to be overlapped on the original image.

Summary of the Invention

However, in the technique disclosed in US Patent No. 10318047, operability when actually performing input to an enlarged object is not considered. For example, in this technique, a user performs a flying flick operation for enlarging a screen to enlarge the screen, but the movement of the enlarged area is not considered. Therefore, when the user wants to enlarge the neighborhood of the enlarged area using this technique, the user needs to cancel the enlarged display once and then to perform an enlargement operation again above a part to be enlarged. The movement of the enlarged area frequently occurs when the user continues to write text or draw a picture in the enlarged area, but this technique requires cumbersome work in such a case.

In view of the above-described problem, it is an object of the present invention to provide an information processing apparatus and an information processing method capable of improving operability to zoom in on a screen of a touch screen in order to perform input.

In order to solve the above-described problem, an information processing apparatus according to the first aspect of the present invention includes: a detection unit which detects a touch operation to bring an operation medium into contact with a touch screen and a hovering state in which the operation medium is in a non-contact state above the touch screen; a display processing unit which generates a zoom-in image obtained by zooming in on at least part of an original image to be displayed on the touch screen, and displays at least a partial area of the zoom-in image on the touch screen as a zoom-in area when the hovering state lasts for a predetermined time or more and the amount of movement of the operation medium in the hovering state is within a first threshold value; and an input unit which accepts input of a letter, a numeral, a symbol, a figure, or a drawing based on the touch operation to the zoom-in area.

An information processing method according to the second aspect of the present invention includes: causing a detection unit to detect a touch operation to bring an operation medium into contact with a touch screen and a hovering state in which the operation medium is in a non-contact state above the touch screen; causing a display processing unit to generate a zoom-in image obtained by zooming in on at least part of an original image to be displayed on the touch screen, and display at least a partial area of the zoom-in image on the touch screen as a zoom-in area when the hovering state lasts for a predetermined time or more and the amount of movement of the operation medium in the hovering state is within a first threshold value; and causing an input unit to accept input of a letter, a numeral, a symbol, a figure, or a drawing based on the touch operation to the zoom-in area.

The above-described aspect of the present invention can improve operability to zoom in on a screen of the touch screen in order to perform input.

Brief Description of the Drawings

FIG. 1 is a diagram illustrating an example of the external configuration of a tablet terminal according to an embodiment of the present invention.
FIG. 2 is a block diagram illustrating an example of the hardware configuration of the tablet terminal according to the embodiment.
FIG. 3 is a block diagram illustrating an example of the functional configuration of the tablet terminal according to the embodiment.
FIG. 4 is a diagram illustrating an example of drawing into an original image and a zoom-in area according to the embodiment.

FIG. 5 is a diagram illustrating an example of the generation of a zoom-in area in a first specific example according to the embodiment.

FIG. 6 is a diagram illustrating an example of the display of the zoom-in area in the first specific example according to the embodiment.

FIG. 7 is a diagram illustrating an example of a change in the zoom-in area in the first specific example according to the embodiment.

FIG. 8 is a diagram illustrating an example of drawing into the zoom-in area in the first specific example according to the embodiment.

FIG. 9 is a diagram illustrating an example of the hiding of the zoom-in area in the first specific example according to the embodiment.

FIG. 10 is a diagram illustrating an example of the generation of a zoom-in area in a second specific example according to the embodiment.

FIG. 11 is a diagram illustrating an example of the display of the zoom-in area in the second specific example according to the embodiment.

FIG. 12 is a diagram illustrating an example of a change in the zoom-in area in the second specific example according to the embodiment.

FIG. 13 is a diagram illustrating an example of drawing into the zoom-in area in the second specific example according to the embodiment.

FIG. 14 is a diagram illustrating an example of the hiding of the zoom-in area in the second specific example according to the embodiment.

FIG. 15 is a flowchart illustrating an example of a flow of processing in the tablet terminal according to the embodiment.

Detailed Description of the Invention

An embodiment of the present invention will be described in detail below with reference to the accompanying drawings.

«1. Configuration of Information Processing Apparatus»

The configuration of an information processing apparatus according to the embodiment of the present invention will be described. In the present embodiment, a tablet terminal will be described as an example of the information processing apparatus.

Note that the information processing apparatus according to the embodiment of the present invention is not limited to the tablet terminal as long as it is a terminal equipped with at least a touch screen. For example, the information processing apparatus may also be realized by a terminal equipped with a touch screen, such as a laptop PC (Personal Computer) or a smartphone. Further, the information processing apparatus may be realized by a foldable terminal (foldable device) capable of folding the touch screen. Note that the terminal that realizes the information processing apparatus is not limited to such an example.

Further, the number of touch screens included in the information processing apparatus is not particularly limited. For example, the information processing apparatus may have two displays (Dual Displays) in such a manner that one of the two displays is a touch screen or that each of the two displays is a touch screen, respectively.

<1-1. External Configuration>

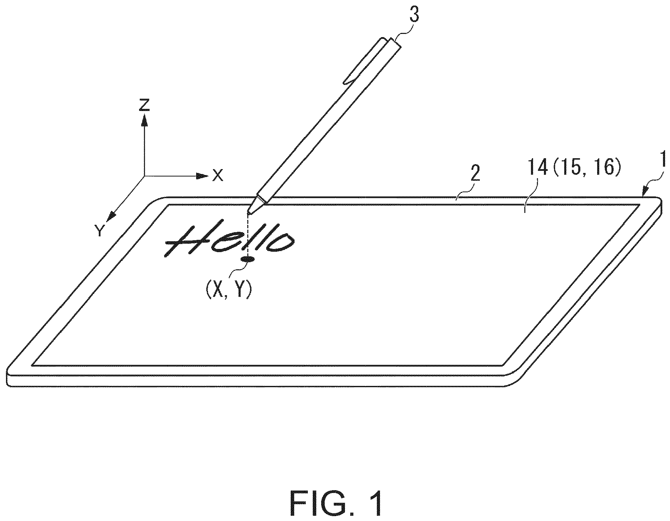

Referring first to FIG. 1, an example of the external configuration of a tablet terminal 1 will be described. FIG. 1 is a diagram illustrating an example of the external configuration of the tablet terminal 1 according to the embodiment of the present invention. In the following, description will be made by expressing the long-side direction of a touch screen 14 as an X-axis direction, the short-side direction of the touch screen 14 as a Y-axis direction, and a direction perpendicular to the surface of the touch screen 14 as a Z-axis direction.

As illustrated in FIG. 1, the tablet terminal 1 includes a chassis 2 and the touch screen 14. The tablet terminal 1 is operated by using an operation medium. In the present embodiment, a touch pen 3 will be described as an example of the operation medium. However, the operation medium is not limited to such an example, and it may be a human finger.

The chassis 2 is a chassis equipped with the touch screen 14. As illustrated in FIG. 1, the touch screen 14 is an input/output device including a display screen 15 capable of displaying various information and a touch panel 16 capable of detecting touch operations. In the present embodiment, a touch operation is performed by bring the touch pen 3 into contact with the surface of the touch screen 14.

The touch pen 3 is a pen-type pointing device. For example, the touch pen 3 has a structure communicable with the tablet terminal 1. As an example, the touch pen 3 performs communication with the tablet terminal 1 using a protocol unique to the touch pen 3. The protocol is, for example, Wacom AES (Active Electro Static). The touch pen 3 may also perform communication with the tablet terminal 1 using near field communication such as Bluetooth (registered trademark). In communication between the touch pen 3 and the tablet terminal 1, the touch pen 3 transmits, to the tablet terminal 1, a signal including a wide variety of information related to the touch pen 3 (hereinafter, also called "operation medium information").

The operation medium information includes, for example, a detection flag, a contact flag, the coordinates of a pen tip, a tilt angle of the pen, and a contact pressure of the pen.

The detection flag is a flag indicative of the presence or absence of detection of the touch pen 3. As an example, when the touch pen 3 gets close to the touch screen 14 and the tip of the touch pen 3 contacts the touch screen 14, "1" is transmitted as the detection flag. On the other hand, when the touch pen 3 does not get close to the touch screen 14, "0" is transmitted as the detection flag.

In the present embodiment, it is detected whether the touch pen 3 is in proximity to the touch screen 14 or not based on the fluctuation of an electric field or electrostatic field on the touch screen 14. The fluctuation of the electric field or electrostatic field is detected by a sensor of the touch screen 14. Specifically, the sensor detects the fluctuation of the electric field or electrostatic field due to the proximity of the touch pen within a predetermined distance from the surface of the touch screen 14. The predetermined distance is, for example, 10 mm. In this case, the sensor can detect the touch pen 3 that approaches within the distance of 10 mm from the surface of the touch screen 14.

The contact flag is a flag indicative of whether the tip of the touch pen 3 and the touch screen 14 have contacted each other or not. The contact between the tip of the touch pen 3 and the touch screen 14 is detected, for example, in a case where a pressure sensor included in the touch pen 3 is pressed. As an example, when the tip of the touch pen 3 has contacted the touch screen 14, "1" is transmitted as the contact flag. On the other hand, when the tip of the touch pen 3 and the touch screen 14 do not contact each other, "0" is transmitted as the contact flag.

The coordinates of the pen tip represent the position of the pen tip on the surface of the touch screen 14. For example, as illustrated in FIG. 1, the coordinates of the pen tip are represented by (X, Y). Note that the coordinates of the pen tip while the touch pen 3 is being detected are represented by (X, Y) regardless of whether the pen tip and the touch screen 14 are in contact with each other or not. The range of the coordinates of the pen tip is determined according to the size of the touch screen 14.

The tilt angle of the pen is an angle indicative of the tilt of the touch pen 3 with respect to the touch screen 14. The tilt angle of the pen includes, for example, an angle indicative of the tilt of the touch pen 3 in the X-axis direction and an angle indicative of the tilt of the touch pen 3 in the Y-axis direction.

The contact pressure of the pent represents a pressure applied to the pen tip when the touch pen 3 and the touch screen 14 have contacted each other.

Based on the information included in the signal received from the touch pen 3, the tablet terminal 1 detects operations being performed to the touch pen 3. Note that the details of a detection method will be described later. The operations includes, for example, a touch operation, a move operation, and a zoom-in operation.

The touch operation is an operation to bring the tip of the touch pen 3 into contact with the surface of the touch screen 14. When a touch operation is performed, the tablet terminal 1 displays, on the touch screen 14, information according to the touch operation. For example, when a word "Hello" is drawn on the touch screen 14 with touch operations, the touch screen 14 displays the word "Hello" on the display screen 15 of the touch screen 14 as illustrated in FIG. 1.

The move operation is an operation to move the touch pen 3 for example, in order to change a range in which an image displayed on the display screen 15 is zoomed in. When a move operation is performed, for example, the tablet terminal 1 changes the position or size of the range to be zoomed in, or changes both of them. The touch pen 3 to which the move operation is performed is in a non-contact state with the touch screen. Note that such a state that the touch pen 3 is in non-contact with the touch screen 14 and the touch pen 3 is detected from the touch screen 14 is also called a "hovering state" below. Note further that a position indicated by the coordinates of the tip of the touch pen 3 in the hovering state is also called a "hovering position" below.

The zoom-in operation is, for example, such an operation as not to move the touch pen 3 while keeping in the hovering state for a certain amount of time or more. When a zoom-in operation is performed, for example, the tablet terminal 1 zooms in on an image displayed on the display screen 15.

<1-2. Hardware Configuration>

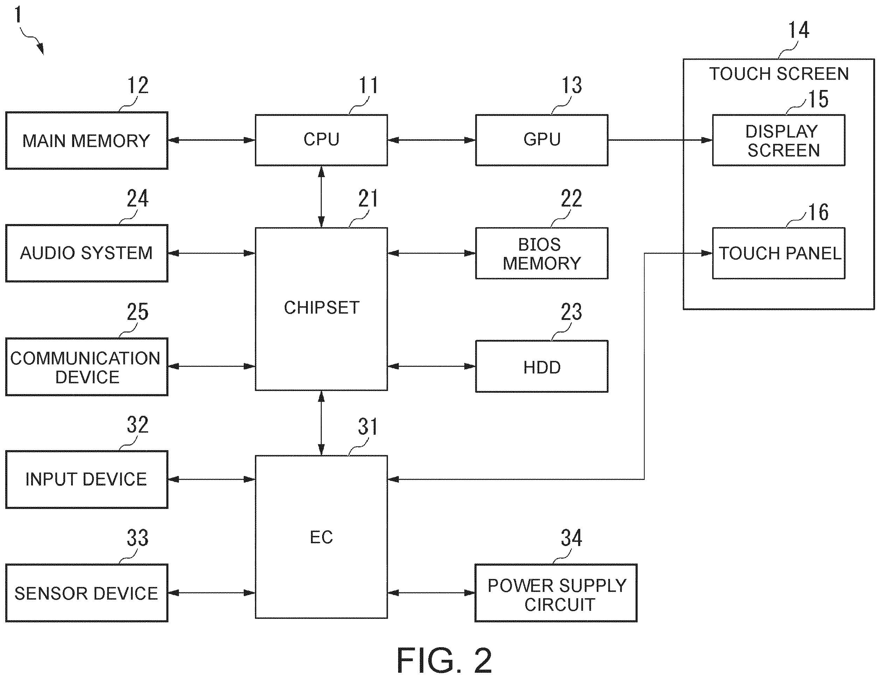

Referring next to FIG. 2, an example of the hardware configuration of the tablet terminal 1 will be described. FIG. 2 is a diagram illustrating an example of the hardware configuration of the tablet terminal 1 according to the present embodiment.

As illustrated in FIG. 2, the tablet terminal 1 includes a CPU 11, a main memory 12, a GPU 13, the touch screen 14, a chipset 21, a BIOS memory 22, an HDD 23, an audio system 24, a communication device 25, an EC 31, an input device 32, a sensor device 33, and a power supply circuit 34. The touch screen 14 has the display screen 15 and the touch panel 16.

The CPU (Central Processing Unit) 11 executes various kinds of arithmetic processing by program control to control the entire tablet terminal 1.

The main memory 12 is a writable memory used as reading areas of execution programs of the CPU 11 or working areas to which processing data of the execution programs are written. The main memory 12 is configured, for example, to include plural DRAM (Dynamic Random Access Memory) chips. The execution programs include an OS, various drivers for hardware-operating peripheral devices, various services/utilities, application programs, and the like.

The GPU (Graphic Processing Unit) 13 executes image processing under the control of the CPU 11 to generate display data. The GPU 13 is connected to the display screen 15 to output the generated display data to the display screen 15.

The touch screen 14 displays, on the display screen 15, various information according to the display data converted to a video signal, and detects a touch by the operation medium or the proximity of the operation medium by using the touch panel 16 to accept operation input by the operation medium.

The display screen 15 is, for example, a display device such as a liquid crystal display. Note that the display screen 15 may be bendable (foldable).

The touch panel 16 is superimposed on the display surface of the display screen 15. The touch panel 16 detects the hovering position/touch position, and the like of the operation medium such as the touch pen or a finger. Note that the touch panel 16 may be constructed integrally with the display screen 15 to be bendable (foldable) like the display screen 15.

The chipset 21 includes controllers, such as USB (Universal Serial Bus), serial ATA (AT Attachment), an SPI (Serial Peripheral Interface) bus, a PCI (Peripheral Component Interconnect) bus, a PCI-Express bus, and an LPC (Low Pin Count) bus, and plural devices are connected to the chipset 21. In FIG. 2, the BIOS memory 22, the HDD 23, the audio system 24, the communication device 25, and the EC 31 are connected to the chipset 21 as examples of the devices.

The BIOS (Basic Input Output System) memory 22 is configured, for example, by an electrically rewritable nonvolatile memory such as an EEPROM (Electrically Erasable Programmable Read Only Memory) or a flash ROM (Read Only Memory). The BIOS memory 22 stores a BIOS and system firmware for controlling the EC 31 and the like.

The HDD (Hard Disk Drive) 23 (an example of a nonvolatile storage device) stores the OS, various drivers, various services/utilities, application programs, and various data.

The audio system 24 records, plays back, and outputs sound data. For example, a microphone and a speaker are connected to the audio system 24.

The communication device 25 is connected to other devices communicably through a wireless or wired communication network to transmit and receive various data. For example, the communication device 25 is configured to include a wired LAN interface such as the Ethernet (registered trademark), a wireless LAN interface such as Wi-Fi (registered trademark), and the like. Note that the communication device 25 may also be configured to include a USB interface and a Bluetooth (registered trademark) interface.

The EC (Embedded Controller) 31 is a one-chip microcomputer which monitors and controls various devices (peripheral devices, sensors, and the like) regardless of the system state of the tablet terminal 1. The EC 31 includes a CPU, a ROM (Read only Memory), and a RAM (Random Access memory), which are not illustrated. The EC 31 operates independently of the CPU 11 to function mainly as a control unit for controlling the operating environment inside the tablet terminal 1. The EC 31 reads a control program prestored in the ROM to execute processing instructed by various commands written in the read control program in order to implement various functions.

The EC 31 is equipped with multi-channel A/D input terminal and D/A output terminal, a timer, and digital input/output terminals. To the EC 31, for example, the input device 32, the sensor device 33, the power supply circuit 34, and the like are connected through these input/output terminals, and the EC 31 controls the operation of these devices.

The input device 32 includes, for example, a pointing device such as a mouse and a touch pad, and an input device such as a keyboard. A microphone used to input voice may also be included in the input device 32.

The sensor device 33 includes, for example, a proximity sensor. As an example, the proximity sensor is a capacitive sensor to detect the approach of an object. For example, when the operation medium is a finger, the proximity of the finger to the touch screen is detected by the capacitive sensor. Specifically, when detecting that capacitance on the touch screen 14 slightly changes, the capacitive sensor detects that the finger is in proximity to the touch screen 14. Note that when detecting that capacitance on the touch screen 14 changes sharply, the capacitive sensor may detect that the finger has contacted the touch screen 14. Note that the proximity of the touch pen 3 to the touch screen may also be detected by the proximity sensor.

The power supply circuit 34 includes, for example, a DC/DC converter, a charge/discharge unit, a battery unit, an AC/DC adapter, and the like to convert DC voltage supplied from an external power supply such as through the AC/DC adapter or supplied from a battery into plural voltages required to operate the tablet terminal 1. Further, the power supply circuit 34 supplies power to each unit of the tablet terminal 1 under the control of the EC 31.

<1-3. Functional Configuration>

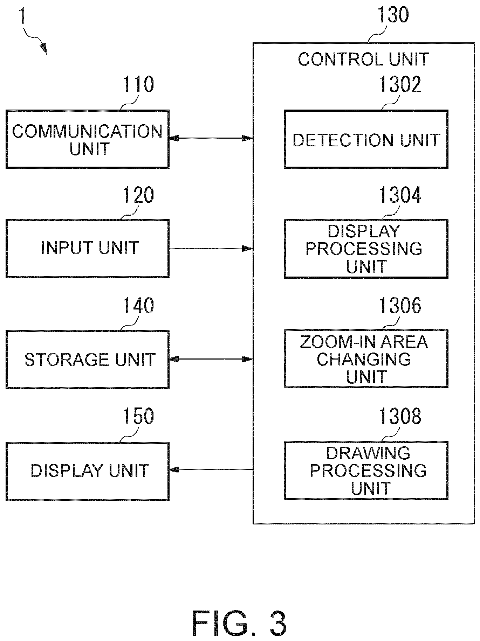

Referring next to FIG. 3, an example of the functional configuration of the tablet terminal 1 will be described. FIG. 3 is a block diagram illustrating an example of the functional configuration of the tablet terminal 1 according to the present embodiment. As illustrated in FIG. 3, the tablet terminal 1 includes a communication unit 110, an input unit 120, a control unit 130, a storage unit 140, and a display unit 150.

(1) Communication Unit 110

The communication unit 110 has a function to transmit and receive various information. This function is, for example, implemented by the communication device 25 described with reference to FIG. 2. For example, the communication unit 110 receives a signal including operation medium information transmitted from the touch pen 3, and outputs the operation medium information to the control unit 130.

(2) Input Unit 120

The input unit 120 has a function to accept input of various information. This function is, for example, implemented by the touch screen 14, the input device 32, the sensor device 33, and the like described with reference to FIG. 2. For example, the input unit 120 accepts information to be input to (drawn on) the touch screen 14 by using the operation medium. In the present embodiment, the input unit 120 accepts input of a letter, a numeral, a symbol, a figure, or any drawing input based on a touch operation to a screen zoomed in on the display unit 150 (display screen 15). The input unit 120 also accepts information input by operating the input device 32. Further, the input unit 120 accepts input of information acquired by the sensor device 33. The input unit 120 outputs the accepted input information to the control unit 130.

(3) Control Unit 130

The control unit 130 has a function to control the general operation of the tablet terminal 1. This function is, for example, implemented by the CPU 11, the chipset 21, and the like described with reference to FIG. 2. As illustrated in FIG. 3, the control unit 130 includes a detection unit 1302, a display processing unit 1304, a zoom-in area changing unit 1306, and a drawing processing unit 1308.

(3-1) Detection Unit 1302

The detection unit 1302 has a function to perform detection related to the touch pen 3. For example, the detection unit 1302 detects the touch pen 3, the state of the touch pen 3, an operation being performed to the touch pen 3, and the like based on operation medium information input from the communication unit 110. The detection unit 1302 outputs the detection results to at least one processing unit of the display processing unit 1304, the zoom-in area changing unit 1306, and the drawing processing unit 1308.

For example, the detection unit 1302 detects the touch pen 3 in proximity to the touch screen 14 based on the detection flag included in the operation medium information. Specifically, when the detection flag is "1," the detection unit 1302 detects that the touch pen 3 from which the operation medium information is transmitted is in proximity to the touch screen 14. On the other hand, when the detection flag is "0," the detection unit 1302 does not detect that the touch pen 3 from which the operation medium information is transmitted is in proximity to the touch screen 14.

Further, the detection unit 1302 detects the hovering state based on the detection flag and the contact flag included in the operation medium information. As an example, it is assumed that the detection flag is "1" and the contact flag is "0." This case indicates that the touch pen 3 is located within a predetermined distance from the touch screen 14 but not in contact with the touch screen 14. Therefore, when the detection flag is "1" and the contact flag is "0," the detection unit 1302 detects the touch pen 3 as the touch pen 3 in the hovering state.

Further, the detection unit 1302 detects a touch operation based on the detection flag and the contact flag included in the operation medium information. As an example, it is assumed that the detection flag is "1" and the contact flag is "1." This case indicates that the touch pen 3 is located within the predetermined distance from the touch screen 14 and in contact with the touch screen 14. Therefore, when the detection flag is "1" and the contact flag is "1," the detection unit 1302 detects the touch pen 3 as the touch pen 3 to which the touch operation is being performed.

Further, when detecting that the hovering position of the touch pen 3 is almost stationary while a zoom-in display is not being provided, the detection unit 1302 detects that the zoom-in operation is being performed by the touch pen 3. As an example, in a state where the zoom-in display is not provided, when the amount of movement of the touch pen 3 per predetermined unit time is equal to or less than a predetermined first threshold value in the middle of continuing the hovering state of the touch pen 3, the detection unit 1302 detects that the operation is a zoom-in operation. In a more specific example, when such a state that the amount of movement of the touch pen 3 in the X and Y directions is a predetermined distance or less (for example, +/-2 mm) lasts for a predetermined unit time (for example, one second) or more, it is indicated that the touch pen 3 is not moved while keeping in the hovering state for a certain amount of time or more. Therefore, when the amount of movement of the hovering position during the predetermined unit time is within the first threshold value, the detection unit 1302 detects the touch pen 3 as the touch pen 3 to which the zoom-in operation is being performed.

The detection conditions of the touch pen 3 to which the zoom-in operation is being performed include a condition on whether the hovering state lasts for the certain amount of time or more. This can prevent unintentional zoom in when the state of the touch pen 3 becomes the hovering state unintentionally for a user. The detection conditions of the touch pen 3 to which the zoom-in operation is being performed also include a condition on whether the amount of movement of the hovering position is within the first threshold value or not. This can prevent unintentional zoom-in when the user is moving the touch pen 3 to a next drawing position (for example, the drawing position of a next letter) in the neighborhood of the touch screen 14.

Further, based on the amount of movement of the touch pen 3 in the hovering position, the detection unit 1302 detects the touch pen 3 to which a move operation is being performed to change the zoom-in range during zooming in. As an example, it is assumed that the amount of movement of the hovering position during zooming in is equal to or more than a second threshold value (for example, 15 mm). In this case, the detection unit 1302 detects the touch pen 3 as the touch pen 3 to which the move operation is being performed. Note that the amount of movement of the hovering position during displaying a zoomed-in screen is defined by a distance from the coordinates of a predetermined reference point in a range being zoomed in to the coordinates of the current hovering position. The reference point is any predefined position such as the center point or vertex of the range being zoomed in.

As described above, the detection conditions of the touch pen 3 to which the move operation is being performed include a condition on whether or not the amount of movement of the hovering position during zooming in is equal to or more than the second threshold value. This can prevent the zoom-in screen from being unintentionally moved when the user changes the drawing position a little (for example, when the user draws the next letter).

Note that the amount of movement is calculated as the absolute value of the amount of the hovering position moved on the XY plane from the predetermined reference point.

(3-2) Display Processing Unit 1304

The display processing unit 1304 has a function to perform processing related to the zoom-in display of the screen displayed on the display unit 150. For example, when a zoom-in operation is being performed to the detected touch pen 3, the display processing unit 1304 generates a zoom-in image obtained by zooming in on at least part of an original image to be displayed on the display unit 150. The zoom-in image may be an image obtained by zooming in on part of the original image, or an image obtained by zooming in on the entire original image.

The display processing unit 1304 displays at least a partial area of the generated zoom-in image on the display unit 150 as a zoom-in area. The display processing unit 1304 may display the partial area of the zoom-in image, obtained by zooming in on part of the original image, on the display unit 150 as the zoom-in area, or display the entire area of the zoom-in image, obtained by zooming in on part of the original image, on the display unit 150 as the zoom-in area. Further, the display processing unit 1304 may display a partial area of a zoom-in image, obtained by zooming in on the entire original image, on the display unit 150 as a zoom-in area.

Note that the size of the zoom-in area is not particularly limited. For example, the size of the zoom-in area may be the same as the size of the display unit 150, or smaller than the size of the display unit 150.

The display processing unit 1304 displays the zoom-in area in a manner to be overlaid on the display unit 150. Upon overlaying, the display processing unit 1304 overlays the zoom-in area on a partial area of the display unit 150. As an example, the display processing unit 1304 overlays the zoom-in area on a partial area of the original image displayed on the display unit 150. In this case, the original image may be displayed over the entire display unit 150 or displayed on part of the display unit 150. Further, upon overlaying, the display processing unit 1304 may overlay the zoom-in area over the entire display unit 150. As an example, the display processing unit 1304 overlays the zoom-in area over the entire area of the original image displayed over the entire area of the display unit 150. Note that the range of an image displayed in the zoom-in area is determined by the position of the touch pen.

As the original image and the image displayed in the zoom-in area, information (hereinafter also called "drawing information") input (drawn) with touch operations of the touch pen 3 is drawn by processing of the drawing processing unit 1308 to be described later. When drawing information is drawn as the original image, the display processing unit 1304 zooms in on the original image obtained by drawing the drawing information to generate a new zoom-in image. Then, the display processing unit 1304 overlays the generated new zoom-in image on the original image to display a zoom-in area.

When the touch pen 3 is no longer detected during displaying the zoom-in area, the display processing unit 1304 hides the zoom-in area. On this occasion, the display processing unit 1304 deletes the zoom-in area. The zoom-in area is being displayed in a manner to be overlaid on the original image. Therefore, when the zoom-in area is hidden, only the original image is displayed on the display unit 150.

The display processing unit 1304 may also determine a zoom-in magnification of the original image based, for example, on a distance d from the touch screen 14 to the tip of the touch pen 3 during the zoom-in operation. Specifically, the distance d is the length of a straight line between the pen tip and the surface of the touch screen 14, where the straight line passes through the pen tip and intersect vertically with the surface of the touch screen 14. As an example, the display processing unit 1304 increases the zoom-in magnification as the distance d becomes shorter, and reduces the zoom-in magnification as the distance d becomes longer. The display processing unit 1304 may also determine the zoom-in magnification of the original image based on the length of time for which the zoom-in operation is being performed. As an example, upon determining the zoom-in operation, the display processing unit 1304 increases the zoom-in magnification as the time for which the amount of movement of the touch pen 3 continues at the predetermined first threshold value or less becomes longer, and reduces the zoom-in magnification as the time becomes shorter.

(3-3) Zoom-in Area Changing Unit 1306

The zoom-in area changing unit 1306 has a function to perform processing related to a change in zoom-in area displayed on the display unit 150. For example, when the touch pen 3 is moved in the hovering state during displaying a zoom-in area, the zoom-in area changing unit 1306 changes the zoom-in area. For example, when the amount of movement of the hovering position becomes the second threshold value or more during displaying the zoom-in area, and hence it is determined that a move operation to the touch pen 3 is being performed, the zoom-in area changing unit 1306 changes the zoom-in area. Alternatively, the zoom-in area changing unit 1306 may increase the size of the zoom-in area.

As an example of a change in the zoom-in area, the zoom-in area changing unit 1306 changes the position of an area to be displayed (overlaid) as the zoom-in area on the original image to change an image to be displayed in the zoom-in area. In this case, for example, the zoom-in area changing unit 1306 moves the position of the zoom-in area in the same direction as the direction to move the hovering position. Thus, the zoom-in area changing unit 1306 can display, in the zoom-in area, an image located in the moving direction of the hovering position.

As another example of the change in the zoom-in area, the zoom-in area changing unit 1306 scrolls an image to be displayed in the zoom-in area to change the image to be displayed in the zoom-in area. In this case, the zoom-in area changing unit 1306 scrolls the image in a direction opposite to the direction to move the hovering position. Thus, the zoom-in area changing unit 1306 can display, in the zoom-in area, an image located in the moving direction of the hovering position.

As the second threshold value, for example, a value sufficiently larger than the amount of moving the pen in the air when the user performs normal drawing (for example, moving the pen tip away from the touch display to write the next letter) is set. This can prevent the position or size of the zoom-in area from being changed following the movement of the tip of the touch pen 3 unintentionally for the user.

Note that the timing at which the zoom-in area changing unit 1306 starts to change the zoom-in area when the amount of movement of the hovering position becomes the second threshold value or more is not particularly limited. For example, the zoom-in area changing unit 1306 starts to change the position or size of the zoom-in area immediately after the amount of movement of the hovering position becomes the second threshold value or more.

The zoom-in area changing unit 1306 may also start to change the position or size of the zoom-in area when the touch pen 3 stands still in the hovering state for a predetermined time or more after the amount of movement of the hovering position becomes the second threshold value or more (for example, after the amount of movement falls within 2 mm). In this case, the user intentionally stops the movement of the touch pen 3 to change the zoom-in area. This can prevent any change in zoom-in area unintentional for the user.

The second threshold value may be changed dynamically. For example, the zoom-in area changing unit 1306 determines the second threshold value based on the size of an object included in the zoom-in area displayed on the display unit 150. The object is, for example, a drawn letter, numeral, symbol, figure, or the like.

Further, the moving speed or the amount of movement of the position of the zoom-in area, or the size change speed may be changed dynamically. As an example of changing the moving speed of the position of the zoom-in area, the zoom-in area changing unit 1306 changes the position of an area to be displayed as the zoom-in area on the original image at a moving speed based on the moving speed of the touch pen 3 and the zoom-in magnification of the original image. As an example of changing the amount of movement of the position of the zoom-in area, the zoom-in area changing unit 1306 determines the amount of movement of the zoom-in area based on the moving speed of the touch pen 3 and the zoom-in magnification of the original image. For example, as illustrated in Equation (1) below, the zoom-in area changing unit 1306 gives, to the amount of movement of the zoom-in area, a correlation inversely proportional to the zoom-in magnification of the original image. Thus, the zoom-in area changing unit 1306 can move the zoom-in area at the right speed, not too fast, not to slow.

$$\text{Amount of Movement of Zoom-in Area = Constant} \times \\ \text{Amount of Movement of Touch Pen 3/Zoom-in Magnification} \\ (1)$$

When the size of the zoom-in area is smaller than the size of the display screen 15 of the touch screen 14, the determination on whether the zoom-in area is to be changed or not may be made based on whether the hovering position of the touch pen 3 goes out of the zoom-in area or not. The determination may also be made based on whether or not the hovering position of the touch pen 3 goes out of an area offset more inward than the outer edge of the zoom-in area. These determinations mean that the second threshold value is determined based on the position of the reference point used to calculate the amount of movement of the touch pen 3, and the shape and size of the zoom-in area.

(3-4) Drawing Processing Unit 1308

The drawing processing unit 1308 has a function to perform processing related to drawing information drawn on the display unit 150. For example, the drawing processing unit 1308 draws, both in the zoom-in area and the original image, drawing information input to the zoom-in area with a touch operation of the touch pen 3 to the display unit 150 during displaying the zoom-in area.

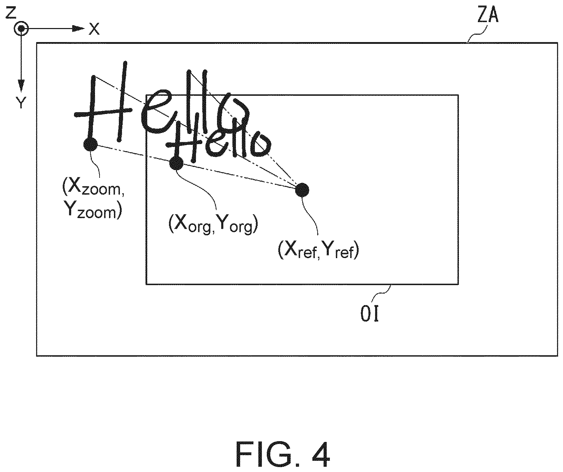

Referring here to FIG. 4, an example of drawing into the original image and the zoom-in area will be described. FIG. 4 is a diagram illustrating an example of drawing into the original image and the zoom-in area according to the present embodiment. In the example illustrated in FIG. 4, the word "Hello" is input as drawing information.

First, the drawing processing unit 1308 draws the word "Hello" into a zoom-in area ZA. Then, the drawing processing unit 1308 draws the word "Hello" onto an original image OI. At this time, the drawing processing unit 1308 transmits, to the original image OI, a signal zoomed out based on the center point ($X_{ref}$, $Y_{ref}$) of the original image OI to draw the word on the original image OI. The drawing position ($X_{org}$, $Y_{org}$) of the word on the original image OI is, for example, calculated by Equation (2) and Equation (3) below. Note that the coordinates ($X_{zoom}$, $Y_{zoom}$) represent a drawing position of the word drawn in the zoom-in area ZA, and zoom_ratio represents the zoom-in magnification of the original image.

$$X_{org} = (X_{zoom} - X_{ref})/zoom\_ratio + X_{ref} \quad (2)$$

$$Y_{org} = (Y_{zoom} - Y_{ref})/zoom\_ratio + Y_{ref} \quad (3)$$

(4) Storage Unit 140

The storage unit 140 has a function to store various information. This function is, for example, implemented by the main memory 12, the BIOS memory 22, the HDD 23, and the like described with reference to FIG. 2. For example, the storage unit 140 stores data of various applications, data output in processing of the control unit 130, and the like.

(5) Display Unit 150

The display unit 150 has a function to display various information. This function is, for example, implemented by the display screen 15 of the touch screen 14 described with reference to FIG. 2. For example, the display unit 150 displays the original image and the zoom-in area.

<1-4. Specific Examples>

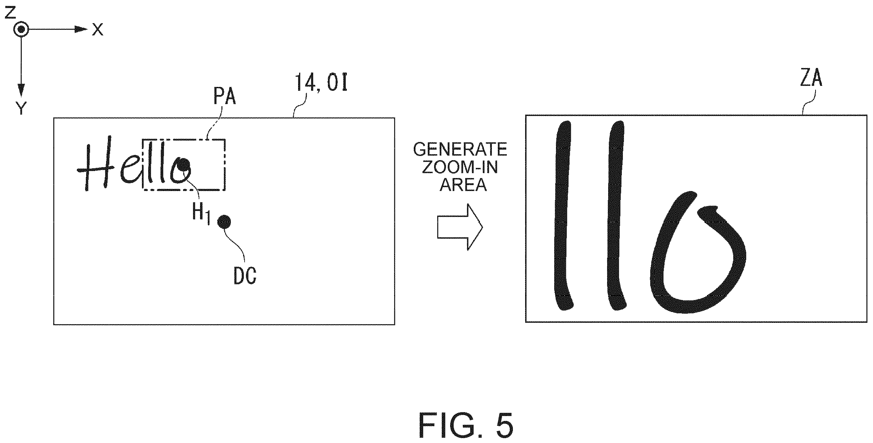

Subsequently, specific examples of processing by the control unit 130 will be described with reference to FIG. 5 to FIG. 14.

(1) First Specific Example

Referring to FIG. 5 to FIG. 9, an example in which a zoom-in area is overlaid on a partial area of the touch screen 14 will be described.

(1-1) Generation of Zoom-in Area

Referring first to FIG. 5, an example of the generation of the zoom-in area in the first specific example will be described. FIG. 5 is a diagram illustrating an example of the generation of the zoom-in area ZA in the first specific example according to the present embodiment.

An example in which a zoom-in operation to the touch pen 3 is performed at a hovering position $H_1$ is illustrated on the left view of FIG. 5. The original image OI is displayed on the touch screen 14 illustrated on the left view of FIG. 5. Note that a center point DC illustrated on the left view of FIG. 5 indicates the center point of the touch screen 14. When a zoom-in operation is performed, the display processing unit 1304 generates a zoom-in area centered on the hovering position $H_1$. For example, the display processing unit 1304 generates a zoom-in image, obtained by zooming in on a partial area PA centered on the hovering position $H_1$ above the original image OI, as a zoom-in area ZA illustrated on the right view of FIG. 5. Note that the size of the zoom-in area ZA is smaller than the size of the touch screen 14 in the first specific example.

(1-2) Display of Zoom-in Area

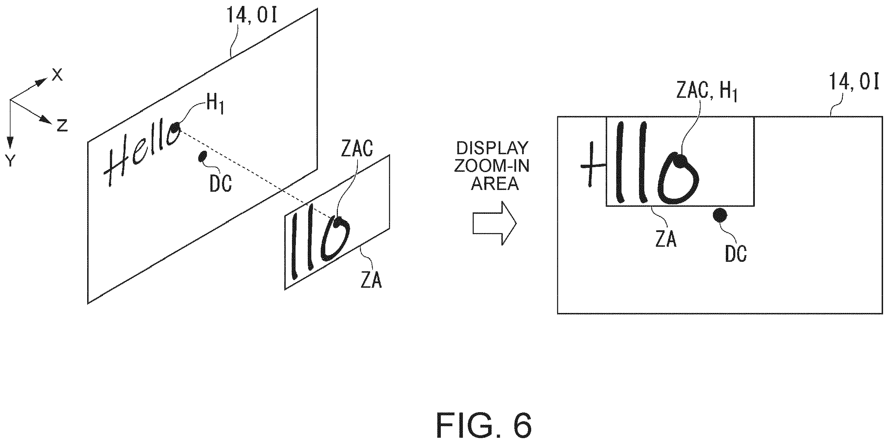

Referring next to FIG. 6, an example of the display of the zoom-in area on the touch screen 14 in the first specific example will be described. FIG. 6 is a diagram illustrating an example of the display of the zoom-in area ZA in the first specific example according to the present embodiment.

After the generation of the zoom-in area ZA, the display processing unit 1304 displays the zoom-in area ZA on the touch screen 14. For example, as illustrate on the left view of FIG. 6, the display processing unit 1304 overlays the generated zoom-in area ZA on the original image OI being displayed on the touch screen 14. At this time, the display processing unit 1304 overlays the zoom-in area ZA on the original image OI in such a manner that a center point ZAC of the zoom-in area ZA matches the hovering position $H_1$. Thus, the display processing unit 1304 can display the zoom-in area ZA on the touch screen 14 as illustrated on the right view of FIG. 6.

(1-3) Change in Zoom-in Area

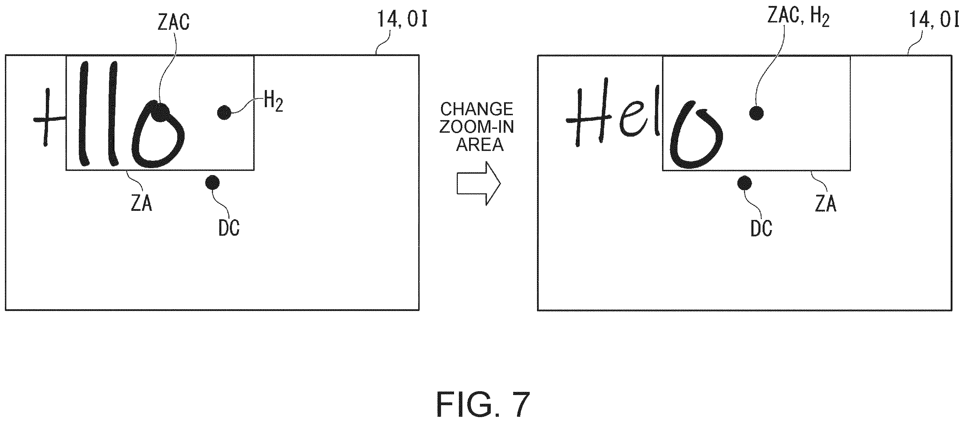

Referring next to FIG. 7, an example of a change in the zoom-in area ZA displayed on the touch screen 14 in the first specific example will be described. FIG. 7 is a diagram illustrating an example of a change in the zoom-in area ZA in the first specific example according to the present embodiment.

On the left view of FIG. 7, an example in which the zoom-in area ZA is displayed on the touch screen 14 in such a manner that the zoom-in area ZA is overlaid on the original image OI displayed on the touch screen 14 is illustrated. On the left view of FIG. 7 after displaying the zoom-in area ZA, for example, it is assumed that the hovering position of the touch pen 3 moves from the center point ZAC of the zoom-in area ZA to a hovering position $H_2$. At this time, it is further assumed that the amount of movement of the touch pen 3 expressed by a distance between the coordinates of the center point ZAC of the zoom-in area ZA and the coordinates of the hovering position $H_2$ during displaying the zoom-in area is equal to or more than the second threshold value. In this case, it is determined that a move operation is performed to the touch pen 3. Therefore, the zoom-in area changing unit 1306 moves the position of the zoom-in area ZA so that the hovering position $H_2$ becomes the center point ZAC of the zoom-in area ZA after being moved as illustrated on the right view of FIG. 7. Note that the example illustrated on the right view of FIG. 7 schematically illustrates the zoom-in area ZA immediately after being moved.

(1-4) Drawing of Drawing Information

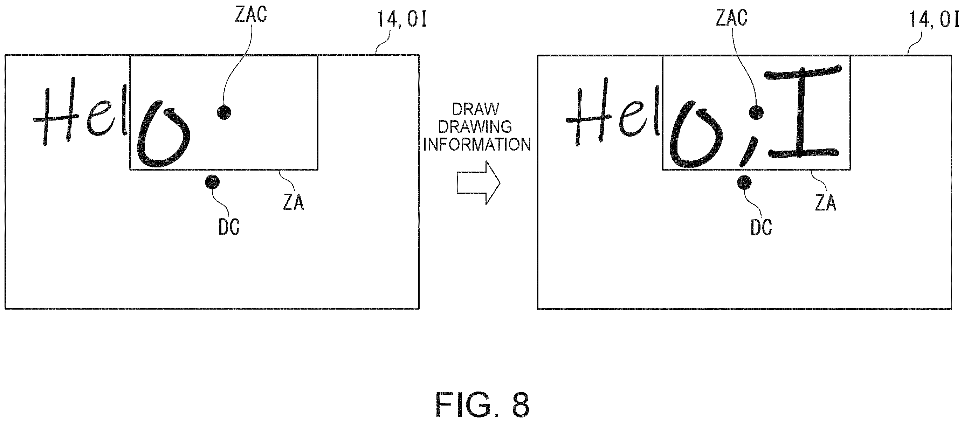

Referring next to FIG. 8, an example of drawing of drawing information into the zoom-in area ZA in the first specific example will be described. FIG. 8 is a diagram illustrating an example of drawing into the zoom-in area ZA in the first specific example according to the present embodiment.

On the left view of FIG. 8, an example in which the zoom-in area ZA is displayed on the touch screen 14 in such a manner that the zoom-in area ZA is overlaid on the original image OI displayed on the touch screen 14 is illustrated. Here, it is assumed that drawing information indicating that ", l" is to be drawn after the letter "o" drawn in the zoom-in area ZA as illustrated on the left view of FIG. 8 is input to the touch screen 14 (zoom-in area ZA) with a touch operation by the touch pen 3. At this time, the drawing processing unit 1308 draws ", l" after the letter "o" drawn in the zoom-in area ZA as illustrated on the right view of FIG. 8. The drawing processing unit 1308 also draws ", I" after the letter "o" onto the original image OI, not illustrated.

(1-5) Hiding of Zoom-in Area

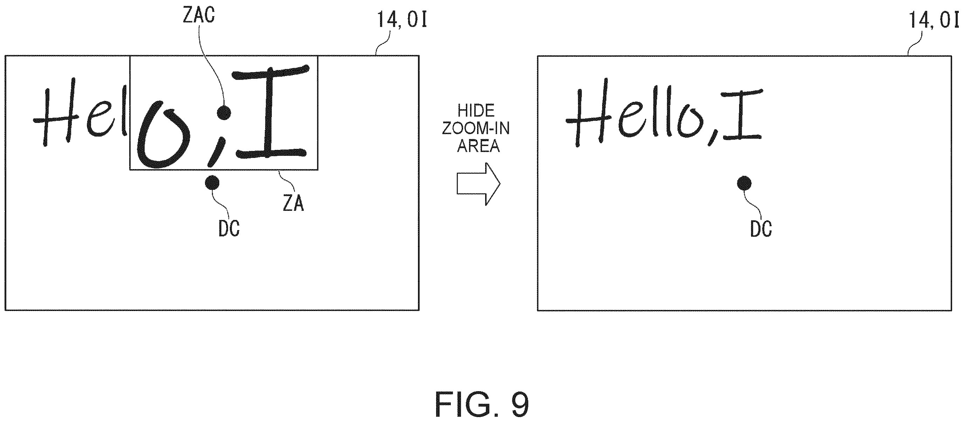

Referring finally to FIG. 9, an example of the hiding of the zoom-in area ZA displayed on the touch screen 14 in the first specific example will be described. FIG. 9 is a diagram illustrating an example of the hiding of the zoom-in area ZA in the first specific example according to the present embodiment.

On the left view of FIG. 9, an example in which the zoom-in area ZA is displayed on the touch screen 14 in such a manner that the zoom-in area ZA is overlaid on the original image OI displayed on the touch screen 14 is illustrated. Here, it is assumed that the touch pen 3 is no longer detected in a state where the zoom-in area ZA is displayed on the touch screen 14 as illustrated on the left view of FIG. 9. At this time, the display processing unit 1304 hides the zoom-in area ZA. Thus, the original image OI with ", I" drawn after the letter "o" is displayed on the touch screen 14 as illustrated on the right view of FIG. 9.

(2) Second Specific Example

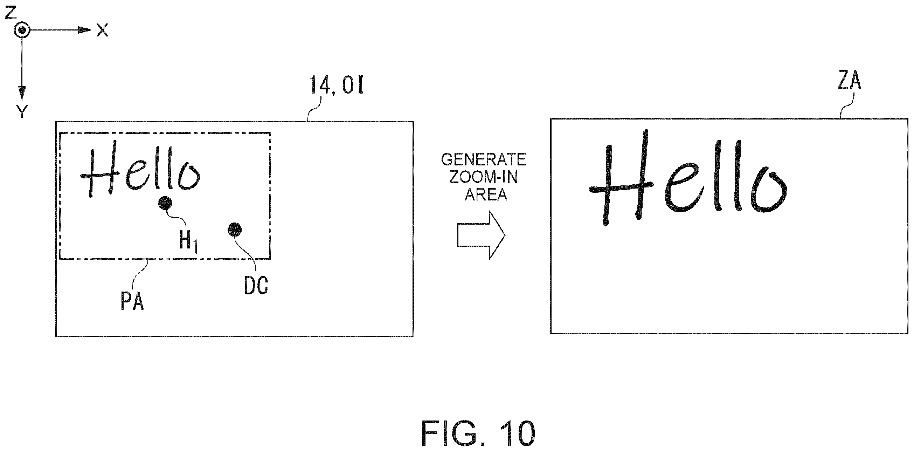

Referring to FIG. 10 to FIG. 14, an example in which a zoom-in area is overlaid on the entire area of the touch screen 14 will be described.

(2-1) Generation of Zoom-in Area

Referring first to FIG. 10, an example of the generation of a zoom-in area in a second specific example will be described. FIG. 10 is a diagram illustrating an example of the generation of a zoom-in area ZA in the second specific example according to the present embodiment.

On the left view of FIG. 10, an example in which a zoom-in operation to the touch pen 3 is performed at the hovering position $H_1$ is illustrated. On the touch screen illustrated on the left view of FIG. 10, the original image OI is being displayed. Note that the center point DC illustrated on the left view of FIG. 10 represents the center point of the touch screen 14. When a zoom-in operation is performed, the display processing unit 1304 generates a zoom-in area centered on the hovering position $H_1$. For example, the display processing unit 1304 generates a zoom-in image, obtained by zooming in on a partial area PA centered on the hovering position $H_1$ above the original image OI, as the zoom-in area ZA illustrated on the right view of FIG. 10. Note that the size of the zoom-in area ZA is the same as the size of the touch screen 14 in the second specific example.

(2-2) Display of Zoom-in Area

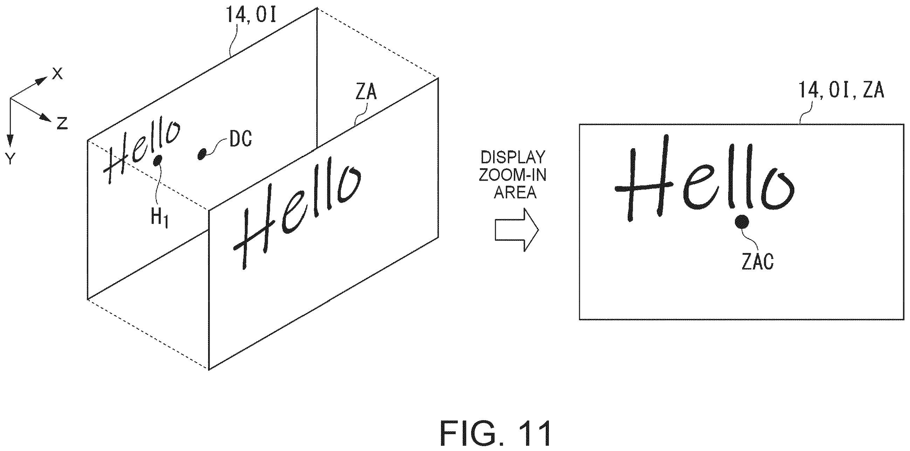

Referring next to FIG. 11, an example of the display of the zoom-in area on the touch screen 14 in the second specific example will be described. FIG. 11 is a diagram illustrating an example of the display of the zoom-in area ZA in the second specific example according to the present embodiment.

After the generation of the zoom-in area ZA, the display processing unit 1304 displays the zoom-in area ZA on the touch screen 14. For example, as illustrated on the left view of FIG. 11, the display processing unit 1304 overlays the generated zoom-in area ZA on the original image OI displayed on the touch screen 14. Thus, the display processing unit 1304 can display the zoom-in area ZA on the touch screen 14 as illustrated on the right view of FIG. 11.

(2-3) Change in Zoom-in Area

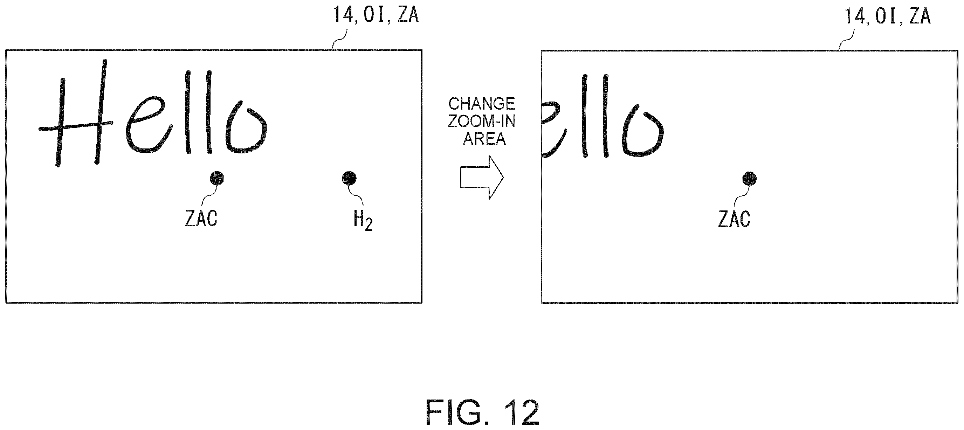

Referring next to FIG. 12, an example of a change in the zoom-in area ZA displayed on the touch screen 14 in the second specific example will be described. FIG. 12 is a diagram illustrating a change in the zoom-in area ZA in the second specific example according to the present embodiment.

On the left view of FIG. 12, an example in which the zoom-in area ZA is displayed on the touch screen 14 in such a manner that the zoom-in area ZA is overlaid on the original image OI displayed on the touch screen 14 is illustrated. On the left view of FIG. 12 after displaying the zoom-in area ZA, for example, it is assumed that the hovering position of the touch pen 3 moves from the center point ZAC of the zoom-in area ZA to the hovering position $H_2$. At this time, it is further assumed that the amount of movement of the touch pen 3 expressed by the distance between the coordinates of the center point ZAC of the zoom-in area ZA and the coordinates of the hovering position $H_2$ during displaying the zoom-in area is equal to or more than the second threshold value. In this case, it is determined that the move operation is performed to the touch pen 3. Therefore, the zoom-in area changing unit 1306 scrolls the image displayed in the zoom-in area ZA to change the image to be displayed in the zoom-in area ZA in such a manner that the hovering position

$H_2$ becomes the center point ZAC of the zoom-in area ZA after being moved as illustrated on the right view of FIG. 12. Note that the example illustrated on the right view of FIG. 12 schematically illustrates the image displayed in the zoom-in area ZA immediately after being scrolled.

(2-4) Drawing of Drawing Information

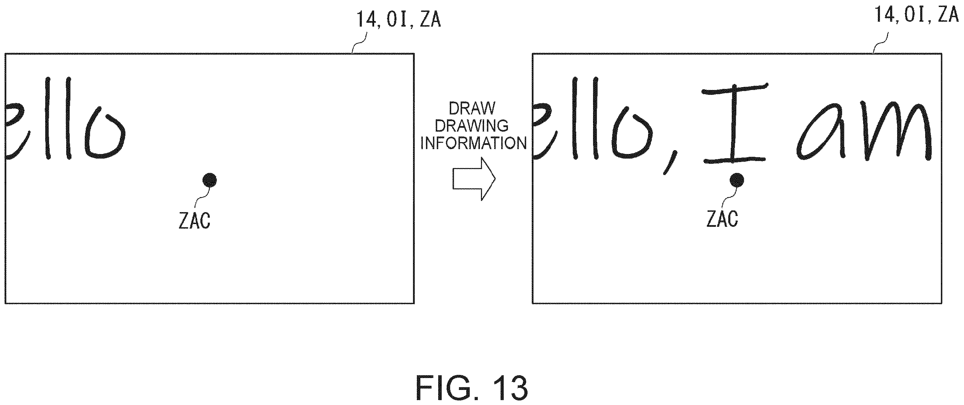

Referring next to FIG. 13, an example of drawing of drawing information into the zoom-in area ZA in the second specific example will be described. FIG. 13 is a diagram illustrating an example of drawing into the zoom-in area ZA in the second specific example according to the present embodiment.

On the left view of FIG. 13, an example in which the zoom-in area ZA is displayed on the touch screen 14 in such a manner that the zoom-in area ZA is overlaid on the original image OI displayed on the touch screen 14 is illustrated. Here, it is assumed that drawing information indicating that ", I am" is to be drawn after the letter "o" drawn in the zoom-in area ZA as illustrated on the left view of FIG. 13 is input to the touch screen 14 (zoom-in area ZA) with a touch operation by the touch pen 3. At this time, the drawing processing unit 1308 draws ", I am" after the letter "o" drawn in the zoom-in area ZA as illustrated on the right view of FIG. 13. The drawing processing unit 1308 also draws ", I am" after the letter "o" onto the original image OI, not illustrated.

(2-5) Hiding of Zoom-in Area

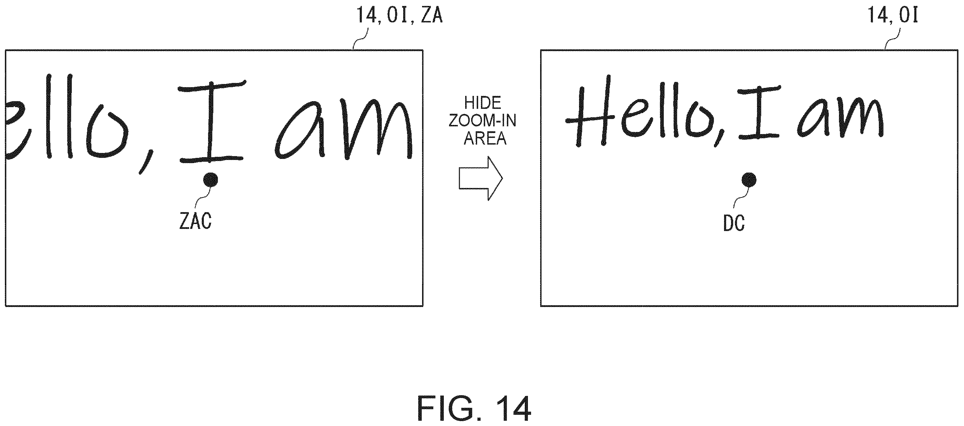

Referring finally to FIG. 14, an example of the hiding of the zoom-in area ZA displayed on the touch screen 14 in the second specific example will be described. FIG. 14 is a diagram illustrating an example of the hiding of the zoom-in area ZA in the second specific example according to the present embodiment.

On the left view of FIG. 14, an example in which the zoom-in area ZA is displayed on the touch screen 14 in such a manner that the zoom-in area ZA is overlaid on the original image OI displayed on the touch screen 14 is illustrated. Here, it is assumed that the touch pen 3 is no longer detected in a state where the zoom-in area ZA is displayed on the touch screen 14 as illustrated on the left view of FIG. 14. At this time, the display processing unit 1304 hides the zoom-in area ZA. Thus, the original image OI with ", I am" drawn after the letter "o" is displayed on the touch screen 14 as illustrated on the right view of FIG. 14.

«2. Flow of Processing»

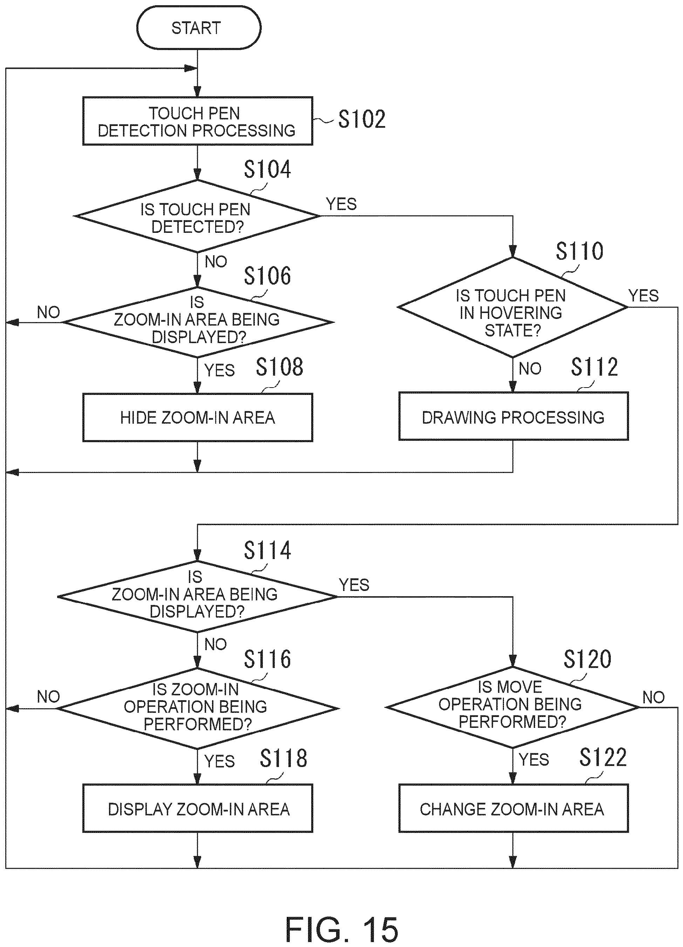

The example of the configuration of the information processing apparatus is described above. Next, a flow of processing in the tablet terminal 1 according to the present embodiment will be described with reference to FIG. 15. FIG. 15 is a flowchart illustrating an example of the flow of processing in the tablet terminal 1 according to the present embodiment.

As illustrated in FIG. 15, the tablet terminal 1 performs detection processing of the touch pen 3 (S102). After the detection processing, the tablet terminal 1 checks whether the touch pen 3 is detected or not (S104).

When the touch pen 3 is not detected (S104/NO), the tablet terminal 1 checks whether a zoom-in area is being displayed or not (S106).

When any zoom-in area is not being displayed (S106/NO), the tablet terminal 1 repeats processing from S102. On the other hand, when a zoom-in area is being displayed (S106/YES), the tablet terminal 1 hides the zoom-in area (S108), and repeats processing from S102.

When the touch pen 3 is detected (S104/YES), the tablet terminal 1 checks whether the touch pen 3 is in the hovering state or not (S110).

When the touch pen 3 is not in the hovering state (S110/NO), the tablet terminal 1 detects the touch pen 3 as the touch pen 3 to which a touch operation is being performed, and drawing processing is performed (S112).

When the touch pen 3 is in the hovering state (S110/YES), the tablet terminal 1 checks whether a zoom-in area is being displayed or not (S114).

When any zoom-in area is not being displayed (S114/NO), the tablet terminal 1 checks whether a zoom-in operation is being performed to the touch pen 3 or not (S116).

When any zoom-in operation is not being performed (S116/NO), the tablet terminal 1 repeats processing from S102. On the other hand, when a zoom-in operation is being performed (S116/YES), the tablet terminal 1 displays the zoom-in area (S118), and repeats processing from S102.

When a zoom-in area is being displayed (S114/YES), the tablet terminal 1 checks whether a move operation is being performed to the touch pen 3 or not (S120).

When any move operation is not being performed (S120/NO), the tablet terminal 1 repeats processing from S102. On the other hand, when a move operation is being performed (S120/YES), the tablet terminal 1 changes the zoom-in area (S122), and repeats processing from S102.

«3. Modification»

The example of the flow of processing is described above. Next, a modification of the embodiment of the present invention will be described. Note that the modification to be described below may be applied alone to the embodiment of the present invention or may be applied in combination to the embodiment of the present invention. Further, the modification may be applied instead of the configuration described in the embodiment of the present invention or may be applied additionally to the configuration described in the embodiment of the present invention.

In the above-described embodiment, the example in which such an operation as not to move the touch pen 3 while keeping in the hovering state for a certain amount of time or more is the zoom-in operation is described, but the present invention is not limited to this example. For example, the operation not to move the touch pen 3 while keeping in the hovering state for the certain amount of time or more may be an operation to zoom out on a screen. As an example, when such an operation as not to move the touch pen 3 while keeping in the hovering state for the certain amount of time or more after the screen is zoomed in, the display processing unit 1304 may zoom out on the screen being zoomed in.

As described above, the tablet terminal 1 according to the present embodiment detects a touch operation to bring the touch pen 3 into contact with the touch screen 14 and the hovering state in which the touch pen 3 is in non-contact with the touch screen 14. Here, it is assumed that the hovering state lasts for a predetermined time or more and the amount of movement of the hovering position of the touch pen 3 in the hovering state is within the first threshold value. In this case, the tablet terminal 1 generates a zoom-in area obtained by zooming in on the display of a position based on the position of the touch pen 3, and displays at least a partial area of the generated zoom-in area on the touch screen 14. Then, the tablet terminal 1 accepts input of a letter, a numeral, a symbol, a figure, or a drawing based on the touch operation to the zoom-in area.

This configuration allows the user who operates the touch pen 3 to zoom in on a screen of the touch screen 14 with such a simple operation as not to move the touch pen 3 in the hovering state for the certain amount of time or more. Further, since the user does not need to move the hovering position of the touch pen 3 for zoom-in display, the zoom-in display can be provided without misalignment of the drawing start position before and after zooming in. Further, the user can perform input of the letter, numeral, symbol, figure, or drawing with a touch operation to the screen zoomed in.

As described above, in the present embodiment, operability to zoom in on the screen of the touch screen 14 in order to perform input can be improved.

The embodiment of the present invention is described above. Note that the tablet terminal 1 in the above-described embodiment may also be realized by a computer. In this case, a program for implementing this function may be recorded on a computer-readable recording medium so that the program recorded on this recording medium is read into a computer system and executed to implement the function. Note that it is assumed that the "computer system" here includes the OS and hardware such as peripheral devices. Further, the "computer-readable recording medium" means a storage medium such as a flexible disk, a magneto-optical disk, a ROM, a portable medium like a CD-ROM, or a hard disk incorporated in the computer system. Further, the computer-readable recording medium" may also include a medium on which the program is dynamically held for a short time such as a communication line when the program is transmitted through the communication line such as a network like the Internet or a telephone line, or a medium on which the program is held for a given length of time, such as a volatile memory inside a computer system as a server or a client in that case. Further, the above-mentioned program may be to implement some of the functions described above, may be to implement the above-described functions in combination with a program already recorded in the computer system, or may be implemented by using a programmable logic device such as an FPGA (Field Programmable Gate Array).

While the embodiment of this invention has been described in detail above with reference to the accompanying drawings, the specific configuration is not limited to that described above, and various design changes can be made without departing from the gist of this invention.

[Description of Symbols]

1        tablet terminal
2        chassis
3        touch pen
14       touch screen
15       display screen
16       touch panel
110      communication unit
120      input unit

130     control unit
140     storage unit
150     display unit
1302    detection unit
1304    display processing unit
1306    zoom-in area changing unit
1308    drawing processing unit

**Claims**

1.  An information processing apparatus comprising:

    a detection unit which detects a touch operation to bring an operation medium into contact with a touch screen and a hovering state in which the operation medium is in a non-contact state above the touch screen;
    a display processing unit which generates a zoom-in image obtained by zooming in on at least part of an original image to be displayed on the touch screen, and displays at least a partial area of the zoom-in image on the touch screen as a zoom-in area when the hovering state lasts for a predetermined time or more and the amount of movement of the operation medium in the hovering state is within a first threshold value; and
    an input unit which accepts input of a letter, a numeral, a symbol, a figure, or a drawing based on the touch operation to the zoom-in area.

2.  The information processing apparatus according to claim 1, further comprising a zoom-in area changing unit which changes the zoom-in area displayed on the touch screen when the operation medium is moved in the hovering state during displaying the zoom-in area.

3.  The information processing apparatus according to claim 2, wherein when the amount of movement of the operation medium becomes a second threshold value or more during displaying the zoom-in area, the zoom-in area changing unit changes the zoom-in area displayed on the touch screen.

4.  The information processing apparatus according to claim 3, wherein the second threshold value is determined based on a size of an object included in the zoom-in area displayed on the touch screen.

5.  The information processing apparatus according to any one of claims 2 to 4, wherein the zoom-in area changing unit changes a position of an area displayed in the original image as the zoom-in area.

6.  The information processing apparatus according to claim 5, wherein the zoom-in area changing unit changes the position of the area displayed in the original image as the zoom-in area as a speed based on a moving speed of the operation medium and a zoom-in magnification of the original image.

7.  The information processing apparatus according to claim 2, wherein the display processing unit displays the zoom-in area in a manner to be overlaid on the touch screen.

8.  The information processing apparatus according to claim 2, wherein the display processing unit displays the zoom-in area in a manner to be overlaid on a partial area of the touch screen.

9.  The information processing apparatus according to claim 8, wherein the zoom-in area changing unit changes a position in which the zoom-in area is overlaid on the touch screen to change an image to be displayed in the zoom-in area.

10. The information processing apparatus according to claim 2, wherein the display processing unit displays the zoom-in area in a manner to be overlaid on an entire area of the touch screen.

11. The information processing apparatus according to claim 8 or 10, wherein the zoom-in area changing unit scroll an image to be displayed in the zoom-in area to change an image to be displayed in the zoom-in area.

12. The information processing apparatus according to any one of claims 1 to 11, further comprising a drawing processing unit which draws information, input with a touch operation of the operation medium to the touch screen during displaying the zoom-in area, as an image to be displayed in the zoom-in area and the original image.

13. The information processing apparatus according to any one of claims 1 to 12, wherein the display processing unit hides the zoom-in area when the operation medium is no longer detected during displaying the zoom-in area.

14. The information processing apparatus according to any one of claims 1 to 13, wherein the display processing unit determines a zoom-in magnification of the original image based on a distance between the touch screen and the operation medium.

15. The information processing apparatus according to any one of claims 1 to 13, wherein the display processing unit determines a zoom-in magnification of the original image based on a length of time for which the hovering state lasts in a state where the amount of movement of the operation medium is within the first threshold value.

16. An information processing method comprising:

causing a detection unit to detect a touch operation to bring an operation medium into contact with a touch screen and a hovering state in which the operation medium is in a non-contact state above the touch screen; causing a display processing unit to generate a zoom-in image obtained by zooming in on at least part of an original image to be displayed on the touch screen, and display at least a partial area of the zoom-in image on the touch screen as a zoom-in area when the hovering state lasts for a predetermined time or more and the amount of movement of the operation medium in the hovering state is within a first threshold value; and causing an input unit to accept input of a letter, a numeral, a symbol, a figure, or a drawing based on the touch operation to the zoom-in area.

FIG. 1

FIG. 2

1

130

CONTROL UNIT

110

| COMMUNICATION UNIT |

1302

| DETECTION UNIT |

120

| INPUT UNIT |

1304

| DISPLAY PROCESSING UNIT |

140

| STORAGE UNIT |

1306

| ZOOM-IN AREA CHANGING UNIT |

150

| DISPLAY UNIT |

1308

| DRAWING PROCESSING UNIT |

# FIG. 3

FIG. 4

FIG. 5

FIG. 6

EP 3 905 018 A1

FIG. 7

FIG. 8

FIG. 9

FIG. 10

EP 3 905 018 A1

FIG. 11

EP 3 905 018 A1

FIG. 12

ello

ZAC

DRAW
DRAWING
INFORMATION
⇨

ello, I am

ZAC

EP 3 905 018 A1

FIG. 13

14, 0I, ZA

ello, I am

ZAC

HIDE
ZOOM-IN
AREA

⇒

14, 0I

Hello, I am

DC

**FIG. 14**

```
                        ┌─────────────┐
                        │    START    │
                        └──────┬──────┘
                               │
        ┌──────────────────────┼──────────────────────────────────────┐
        │                      ▼                                       │
        │          ┌──────────────────────┐  S102                      │
        │          │    TOUCH PEN          │                           │
        │          │ DETECTION PROCESSING  │                           │
        │          └──────────┬───────────┘                           │
        │                     │        S104                            │
        │                     ▼                                        │
        │              ╱─────────────╲          YES                    │
        │             ╱  IS TOUCH PEN  ╲───────────────────┐           │
        │             ╲   DETECTED?    ╱                   │           │
        │              ╲─────────────╱                     │           │
        │                    │ NO    S106                  ▼   S110     │
        │                    ▼                      ╱───────────────╲   │
        │     NO      ╱─────────────╲              ╱  IS TOUCH PEN   ╲  YES
        │◄───────────╱       IS       ╲            ╲  IN HOVERING    ╱──────┐
        │            ╲ ZOOM-IN AREA BEING          ╲    STATE?      ╱   │   │
        │            ╲   DISPLAYED?  ╱              ╲───────────────╱    │   │
        │             ╲─────────────╱                     │ NO   S112   │   │
        │                    │ YES   S108                 ▼             │   │
        │                    ▼                   ┌──────────────────┐   │   │
        │          ┌──────────────────┐          │ DRAWING          │   │   │
        │          │ HIDE ZOOM-IN AREA│          │ PROCESSING       │   │   │
        │          └────────┬─────────┘          └────────┬─────────┘   │   │
        │                   │                             │             │   │
        │◄──────────────────┘                             │             │   │
        │                                                 │             │   │
```

FIG. 15

Europäisches
Patentamt

European
Patent Office

Office européen
des brevets

# EUROPEAN SEARCH REPORT

Application Number

EP 21 16 4521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 825 944 A1 (NOKIA CORP [FI]) 21 January 2015 (2015-01-21) * paragraphs [0007] - [0009] * * paragraphs [0019] - [0075]; figures 1-7 * | 1-16 | INV. G06F3/0481 G06F3/0488 |
| X | US 2013/241827 A1 (RONKAINEN SAMI PEKKA [FI]) 19 September 2013 (2013-09-19) * paragraphs [0072] - [0129]; figures 1-10 * | 1-3,7, 10,11,16 | |
| A | US 2011/074828 A1 (CAPELA JAY CHRISTOPHER [US] ET AL) 31 March 2011 (2011-03-31) * paragraphs [0141] - [0148]; figures 5A,5B,5C * | 10,12 | |
| A | US 2016/048304 A1 (NIRANJANI HIMANSHU [US] ET AL) 18 February 2016 (2016-02-18) * paragraphs [0063], [0069], [0076]; figures 1-9 * | 11 | |
| A | EP 2 840 467 A1 (SAMSUNG ELECTRONICS CO LTD [KR]) 25 February 2015 (2015-02-25) * abstract * * paragraphs [0044] - [0062]; figures 1-4 * | 14 | TECHNICAL FIELDS SEARCHED (IPC) G06F |

The present search report has been drawn up for all claims

| Place of search | Date of completion of the search | Examiner |
|---|---|---|
| The Hague | 8 September 2021 | de Biolley, Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 16 4521

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2021

| Patent document cited in search report | | | Publication date | Patent family member(s) | | | Publication date |
|---|---|---|---|---|---|---|---|
| EP 2825944 | A1 | | 21-01-2015 | CN | 104285202 | A | 14-01-2015 |
| | | | | EP | 2825944 | A1 | 21-01-2015 |
| | | | | US | 2015052481 | A1 | 19-02-2015 |
| | | | | WO | 2013135286 | A1 | 19-09-2013 |
| US 2013241827 | A1 | | 19-09-2013 | CN | 104321734 | A | 28-01-2015 |
| | | | | CN | 109918013 | A | 21-06-2019 |
| | | | | EP | 2825950 | A1 | 21-01-2015 |
| | | | | JP | 5970086 | B2 | 17-08-2016 |
| | | | | JP | 2015510211 | A | 02-04-2015 |
| | | | | KR | 20140136500 | A | 28-11-2014 |
| | | | | PL | 2825950 | T3 | 30-06-2017 |
| | | | | RU | 2014139218 | A | 10-05-2016 |
| | | | | US | 2013241827 | A1 | 19-09-2013 |
| | | | | US | 2014157201 | A1 | 05-06-2014 |
| | | | | WO | 2013135972 | A1 | 19-09-2013 |
| US 2011074828 | A1 | | 31-03-2011 | US | 2011074828 | A1 | 31-03-2011 |
| | | | | WO | 2011037796 | A1 | 31-03-2011 |
| US 2016048304 | A1 | | 18-02-2016 | CN | 106575203 | A | 19-04-2017 |
| | | | | EP | 3180687 | A1 | 21-06-2017 |
| | | | | ES | 2702718 | T3 | 05-03-2019 |
| | | | | KR | 20170041219 | A | 14-04-2017 |
| | | | | US | 2016048304 | A1 | 18-02-2016 |
| | | | | US | 2017160914 | A1 | 08-06-2017 |
| | | | | WO | 2016025356 | A1 | 18-02-2016 |
| EP 2840467 | A1 | | 25-02-2015 | EP | 2840467 | A1 | 25-02-2015 |
| | | | | KR | 20150020778 | A | 27-02-2015 |
| | | | | US | 2015052477 | A1 | 19-02-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10318047 B